# EUROPÄISCHE PATENTSCHRIFT

(11) **EP 3 011 877 B1**
(45) Veröffentlichungstag und Bekanntmachung des Hinweises auf die Patenterteilung: **11.12.2019**
(21) Anmeldenummer: 15190940.5
(22) Anmeldetag: 22.10.2015
(51) Int. Cl.: A47J 31/46, A47J 31/44

(54) **KAFFEEAUTOMAT MIT EINER AUSGABEEINRICHTUNG**
AUTOMATIC COFFEE MACHINE WITH A DISPENSING DEVICE
MACHINE À CAFÉ COMPRENANT UN DISPOSITIF DE SORTIE

(30) Priorität: 23.10.2014 DE 102014221604
(43) Veröffentlichungstag der Anmeldung: 27.04.2016
(73) Patentinhaber: BSH Hausgeräte GmbH, 81739 München (DE)
(72) Erfinder: Hauser, Andreas, 83352 Altenmarkt (DE); Nöth, Christoph, 90403 Nürnberg (DE); Ostermaier, Albert, 83371 Stein a.d. Traun (DE)

(56) Entgegenhaltungen:
- EP-A1- 2 186 454
- DE-U1-202004 014 061
- GB-A- 2 512 815

## Beschreibung

Die vorliegende Erfindung betrifft einen Kaffeeautomaten mit einer Ausgabeeinrichtung zur Ausgabe von Milch, Milchschaum, Wasser und/oder Kaffee gemäß dem Oberbegriff des Anspruchs 1. Die Erfindung betrifft außerdem eine mit einem solchen Kaffeeautomaten koppelbare Ausgabeeinrichtung gemäß dem Oberbegriff des Anspruchs 7.

Gattungsgemäße Kaffeeautomaten sind hinlänglich bekannt und sowohl im gewerblichen als auch im privaten Bereich bereits weit verbreitet. Beispielsweise ist aus der GB 2 512 815 A ein Automat für Espressokaffee mit einem Siebträger bekannt, der einen Griff, einen Auslauf und eine Entspannungskammer aufweist. Zudem ist aus der EP 2 186 454 A1 ein Kaffeeautomat zur Ausgabe von Kaffee, Milch und Milchschaum bekannt. Derartige Kaffeeautomaten sind dabei in der Lage, auch komplexe Kaffeemischgetränke, wie beispielsweise Latte Macchiato oder Cappuccino in hoher Qualität herstellen zu können. Eine Ausgabe des Kaffees bzw. auch von Heißwasser für ein Teegetränk oder eines Kaffeemischgetränks erfolgt dabei über eine Ausgabeeinrichtung, welche oftmals zwei Ausgabekanäle aufweist, um beispielsweise zwei Portionen gleichzeitig produzieren und ausgeben zu können. Für die Optik des ausgegebenen Kaffeegetränks, beispielsweise des Espresso, ist insbesondere die sogenannte Crema entscheidend, da diese das Getränk verschließt. Der Anteil an Crema im Kaffee bestimmt dabei auch die Eigenschaften der Emulsion, wodurch insbesondere der Auslauf bei bekannten Kaffeeautomaten mit reinen Schlauchlösungen abhängig von der Dichte der Medien und der viskosen Eigenschaften der Emulsion ist und dadurch Nachteile aufweist.

Die vorliegende Erfindung beschäftigt sich daher mit dem Problem, für einen Kaffeeautomaten der gattungsgemäßen Art eine verbesserte oder zumindest alternative Ausführungsform anzugeben, die insbesondere einen verbesserten Auslauf aufweist der ein entspannen einer Emulsion ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Auslauf für eine Kaffeeemulsion erstmals als offene Rinne mit einer Führungsrippe auszubilden, wodurch der Emulsion genügend Platz geboten wird, um sich auszubreiten und zu entspannen. Die Führungsrippe leitet dabei die Emulsion von oben nach unten und gibt deren Richtung vor, so dass der Kaffeestrahl immer an derselben Stelle auf eine darunter angeordnete Tasse bzw. auf ein darunter angeordnetes Tropfblech trifft, wodurch eine Verschmutzung vermieden werden kann, da der Fluidstrahl die Tasse stets exakt trifft als auch beim Fehlen der Tasse die im Tropfblech vorgesehenen Löcher. Dies bietet darüber hinaus die Möglichkeit, diese im Tropfblech vorgesehenen Öffnungen kleiner zu gestalten, wodurch designerische Vorteile erzielt werden können. Der erfindungsgemäße Kaffeeautomat weist dazu eine Ausgabeeinrichtung zur Ausgabe von Milch, Milchschaum, Wasser und/oder Kaffee auf, wobei über zumindest einen ersten Ausgabekanal Milch, Milchschaum und/oder Wasser und über zumindest einen zweiten Ausgabekanal Kaffee und/oder Wasser, insbesondere Spülwasser, ausgebbar ist. Erfindungsgemäß ist dabei der zumindest eine zweite Ausgabekanal als offene Rinne mit der zuvor beschriebenen Führungsrippe ausgebildet. Neben der Möglichkeit, dass sich die Emulsion entspannt, gewährleistet der erfindungsgemäß als offene Rinne mit einer Führungsrippe ausgebildete gerade, zweite Ausgabekanal zudem einen geraden Auslauf der ausgegebenen Medien, beispielsweise der Kaffeeemulsion, und zwar unabhängig von der Dichte der Medien und deren viskosen Eigenschaften.

Bei einer vorteilhaften Weiterbildung der Erfindung verläuft der zumindest eine zweite Ausgabekanal zudem schräg zum zumindest einen ersten Ausgabekanal Durch die schräge Anordnung des zumindest einen zweiten Ausgabekanals kann ein größerer Abstand zwischen einem Ausgang des zumindest einen ersten Ausgabekanals und einem Ausgang des zumindest einen zweiten Ausgabekanals geschaffen werden, der verhindert, dass bei einem sich stark aufhäufenden Milchschaum dieser die beiden Ausgänge der beiden Ausgabekanäle miteinander verbindet. Dies würde nämlich dazu führen, dass der nächste Getränkestrahl in Richtung des anderen Ausgangs abgelenkt wird. Dies ist auch besonders dann von Bedeutung, wenn die Auslaufenden der Auslaufkanäle in ein Glas ragen und unterhalb des Füllstandes enden. Mit der erfindungsgemäßen Ausgabeeinrichtung ist es somit möglich, ein vom jeweils gewählten Kaffeeprodukt unabhängiges konstantes Auslaufverhalten zu erzeugen und zudem die Ausgabeeinrichtung äußerst kompakt zu bauen, wodurch sich ebenfalls bauraumtechnische und designerische Vorteile ergeben.

Bei einer vorteilhaften Weiterbildung der erfindungsgemäßen Lösung verläuft die Führungsrippe entlang des zumindest einen zweiten Kanals und bildet am Ende eine Tropfkante. Eine derartige Tropfkante ermöglicht ein exaktes Übergeben des hergestellten Kaffeeprodukts an einen Getränkebecher und gewährleistet zudem, dass bei einem Entnehmen des Getränkebechers noch abtropfender Kaffee stets die im Tropfblech hierfür vorgesehene Öffnung trifft.

Zweckmäßig verläuft der zumindest eine erste Ausgabekanal vertikal und der zumindest eine zweite Ausgabekanal um ca. 20° bis 40° geneigt dazu, wodurch ein jeweiliger Ausgang der beiden Ausgabekanäle weiter voneinander entfernt ist als ein jeweiliger Eingang. Durch die genannte Winkelspanne kann insbesondere verhindert werden, dass sich beispielsweise stark aufhäufender Milchschaum, der aus dem ersten Ausgabekanal ausgegeben wird, bis zum zweiten Ausgabekanal gelangt und dort ausgegebenen Kaffee in unerwünschter Weise, beispielsweise durch Blasenbildung, umlenkt. Dies würde nämlich dazu führen, dass der ausgegebene Kaffee nicht mehr gerade nach unten läuft, sondern durch den Milchschaum in nicht kontrollierbarer Weise umgelenkt wird.

Bei einer weiteren vorteilhaften Ausführungsform der erfindungsgemäßen Lösung weist die Ausgabeeinrichtung einen Kaffeeverteiler mit einem einzigen Zulauf und einem ersten mit dem einen zweiten Ausgabekanal verbundenen Verteilkanal und einem zweiten mit dem anderen zweiten Ausgabekanal verbundenen Verteilkanal auf. Der erste und/oder der zweite Verteilkanal weist dabei einen geringeren Durchmesser auf als der zugehörige zweite Ausgabekanal. Durch den Durchmessersprung zwischen dem jeweiligen Verteilkanal und dem zugehörigen Ausgabekanal kann erzwungen werden, dass das in der Emulsion gelöste CO₂ platzt und dadurch keine größeren Blasen bilden, die einen Ausgang des jeweiligen Verteilkanals zumindest teilweise blockieren und dadurch eine Umlenkung des Kaffees in den anderen Verteilkanal bewirken würden. Durch den großen Durchmessersprung kann somit gewährleistet werden, dass das in der Emulsion gelöste Kohlendioxid CO₂ beim Eintritt in den Ausgabekanal platzt und damit eine kontinuierliche und gleichmäßige Verteilung des Kaffees vom gemeinsamen Zulauf auf beide Verteilkanäle erfolgt.

Die vorliegende Erfindung beruht weiter auf dem allgemeinen Gedanken, eine Ausgabeeinrichtung zur Ausgabe von Milch, Milchschaum, Wasser und/oder Kaffee anzugeben, wobei über zumindest einen ersten Ausgabekanal Milch, Milchschaum und/oder Wasser, beispielsweise Spülwasser, und über zumindest einen zweiten Ausgabekanal Kaffee und/oder Wasser, beispielsweise Spülwasser, ausgebbar ist. Bei dieser Ausgabeeinrichtung ist erfindungsgemäß der zumindest eine zweite Ausgabekanal als offene Rinne mit einer Führungsrippe ausgebildet und zudem schräg zum zumindest einen ersten Ausgabekanal angeordnet. Die erzielbaren Vorteile sind dabei analog zu den in den vorherigen Absätzen beschriebenen Vorteilen, wobei auch verschiedene Ausführungsformen der Ausgabeeinrichtung analog zu den in den vorherigen Absätzen beschriebenen ausgebildet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Kaffeeautomaten mit einer erfindungsgemäßen Ausgabeeinrichtung in einer Frontalansicht,
- Fig. 2: eine Seitenansicht der erfindungsgemäßen Ausgabeeinrichtung,
- Fig. 3: eine Schnittdarstellung durch einen Kaffeeverteiler der Ausgabeeinrichtung.

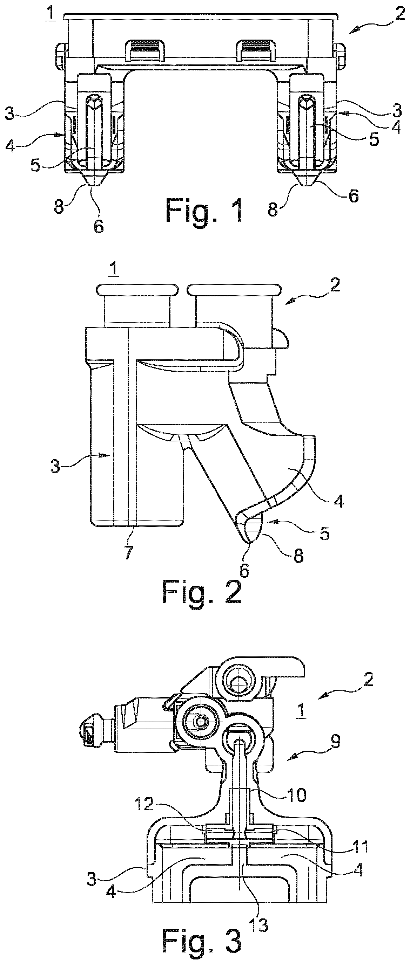

Entsprechend den Figuren 1 bis 3, weist ein erfindungsgemäßer Kaffeeautomat 1, der beispielsweise als Kaffeevollautomat ausgebildet sein kann, eine Ausgabeeinrichtung 2 zur Ausgabe von Milch, Milchschaum, Wasser und Kaffee auf. Die Ausgabeeinrichtung 2 besitzt dabei zwei erste Ausgabekanäle 3 zur Ausgabe von Milch, Milchschaum und/oder Wasser, beispielsweise Spülwasser, und zwei zweite Ausgabekanäle 4 zur Ausgabe von Kaffee und/oder Wasser. Frontal gesehen sind dabei die beiden ersten Ausgabekanäle 3 hinter den zweiten Ausgabekanälen 4 angeordnet und dadurch in Fig. 1 durch diese verdeckt. In Fig. 2 sind die beiden Ausgabekanäle 3, 4 in einer Seitenansicht dargestellt und dadurch beide gezeichnet. Erfindungsgemäß sind nun die beiden zweiten Ausgabekanäle 4 als offene Rinne einer Führungsrippe 5 ausgebildet und verlaufen schräg zum ersten Ausgabekanal 3, wie dies gemäß der Fig. 2 eindeutig zu erkennen ist. Bei der gemäß der Fig. 2 gezeigten Darstellung ist der zweite Ausgabekanal 4 um ca. 30° zum ersten Ausgabekanal 3 geneigt. Rein theoretisch muss selbstverständlich die erfindungsgemäße Ausgabeeinrichtung 2 lediglich zumindest einen ersten Ausgabekanal 3 und zumindest einen zweiten Ausgabekanal 4 aufweisen, wobei jedoch zur gleichzeitigen Zubereitung von zwei Kaffeegetränken üblicherweise zwei erste und zweite Ausgabekanäle 3, 4 nebeneinander angeordnet sind.

Die Führungsrippe 5 verläuft dabei zumindest teilweise entlang des zweiten Ausgabekanals 4 und bildet am Ende eine Tropfkante 6. Diese Tropfkante 6 ermöglicht es mit der offenen und rinnenartigen Ausführungsform des zweiten Ausgabekanals 4, dass über die Tropfkante 6 abgegebene Flüssigkeit die darunter abgestellte Tasse exakt trifft bzw. dass über die Tropfkante 6 abtropfende Flüssigkeit stets eine in einem darunter angeordneten Tropfblech vorgesehene Öffnung trifft und dadurch eine Verschmutzung des Tropfblechs vermieden werden kann. Der erfindungsgemäß gestaltete zweite Ausgabekanal 4 gewährleistet darüber hinaus einen geraden Auslauf der darüber ausgegebenen Fluide bzw. Medien und zwar unabhängig von der Dichte der Medien bzw. deren viskosen Eigenschaften. Der Anteil an Crema im Kaffee bestimmt dabei die Eigenschaften der Emulsion, wobei durch die offene Bauform des zweiten Ausgabekanals 4 der Emulsion genügend Platz gegeben wird, um sich auszubreiten und sich zu entspannen.

Betrachtet man die Fig. 2, so kann man erkennen, dass der zweite Ausgabekanal 4 um ca. 30° zum ersten Ausgabekanal 3 geneigt ist, wobei eine Neigung der beiden Ausgabekanäle 3, 4 üblicherweise im Rahmen zwischen 20° und 40° gewählt werden kann. Wichtig hierfür ist lediglich, dass ein jeweiliger Ausgang 7 des ersten Ausgabekanals 3 eine vordefinierte Entfernung zum Ausgang 8 des zweiten Ausgabekanals 4, beispielsweise der Tropfkante 6, aufweist, um ein Vermischen der beiden ausgegebenen Fluidströme zuverlässig verhindern zu können. Die Distanz zwischen den beiden Ausgängen 7, 8 ist dabei nämlich entscheidend, wenn zum Beispiel Milchschaum überlaufend aus einer Tasse die beiden Ausgänge 7, 8 verbinden würde. In diesem Fall der Verbindung wird der nächste Getränkestrahl in Richtung des anderen Ausgangs 7, 8 abgelenkt, so dass beispielsweise bei einer Zubereitung von Milchschaum über den ersten Ausgabekanal 3 den Ausgang 6 des zweiten Ausgabekanals 4 verschmutzt und bei einem nachfolgend ausgegebenen Kaffee über den zweiten Ausgabekanal 4 dieser in Richtung des Ausgangs 7 des ersten Ausgabekanals 3 in unerwünschter Weise umgelenkt wird und dadurch nicht mehr gerade nach unten ablaufen kann. Dies würde zudem dazu führen, dass unter Umständen die Tasse nicht mehr exakt befüllt oder nach Entfernen der Tasse noch von der Tropfkante 6 abtropfende Flüssigkeit die im dort angeordneten Tropfblech vorgesehene Öffnung nicht mehr trifft und dadurch dieses verschmutzt.

Betrachtet man die Fig. 3, so kann man erkennen, dass die Ausgabeeinrichtung 2 einen Kaffeeverteiler 9 mit einem einzigen Zulauf 10 und einem ersten mit dem einen zweiten Ausgabekanal 4 verbundenen Verteilkanal 11 sowie einen zweiten mit dem anderen zweiten Ausgabekanal 4 verbundenen Verteilkanal 12 aufweist. Der erste und/oder der zweite Verteilkanal 11, 12 besitzen dabei einen deutlich geringeren Durchmesser als der zugehörige zweite Ausgabekanal 4, wodurch es zwischen dem jeweiligen Verteilkanal 11, 12 und dem nachfolgenden damit kommunizierend verbundenen Ausgabekanal 4 zu einem sogenannten Durchmessersprung kommt. Dieser Durchmessersprung ist dabei so gewählt, dass das in der Emulsion gelöste Kohlendioxid (CO₂) beim Übergang zwischen dem Verteilkanal 11, 12 in den zweiten Ausgabekanal 4 aufgrund der Durchmesservergrößerung platzen kann und sich nicht am Ausgang des jeweiligen Verteilkanals 11, 12 in Form einer großen Blase anlagert. Eine derartige große Blase würde nämlich den jeweiligen Verteilkanal 11, 12 endseitig zumindest drosseln oder sogar blockieren, wodurch eine gleichmäßige Ausgabe von Kaffee über beide Verteilkanäle 11, 12 beide Ausgabekanäle 4 nicht mehr gewährleistet werden kann. Ein Steg 13 trennt dabei die beiden Ausgabekanäle 4 voneinander.

Mit dem erfindungsgemäßen Kaffeeautomaten 1 bzw. der erfindungsgemäßen Ausgabeeinrichtung 2 lässt sich eine besonders kleine Bauform für einen Auslauf mit Milch und Kaffeeausgabeeinheit schaffen, was insbesondere für kompakt bauende Kaffeeautomaten 1 von großem Vorteil ist. Durch die Führungsrippe 5 und die Tropfkante 6 kann darüber hinaus gewährleistet werden, dass hierüber abgegebene Flüssigkeit stets eine darunter angeordnete Tasse exakt befüllt bzw. abtropfende Flüssigkeit stets eine in dem darunter angeordneten Tropfblech vorgesehene Öffnung tritt und dadurch keine Verschmutzung des Tropfblechs auftritt. Zudem ist es sogar möglich, diese Öffnungen zu verkleinern, wodurch wiederum designerische Vorteile erzielt werden können. Durch den Durchmessersprung zwischen den Verteilkanälen 11, 12 und den nachgeschalteten Ausgabekanälen 4 kann darüber hinaus eine hohe Kaffeequalität über beide Ausgabestellen gewährleistet werden. Der als offene Rinne mit Führungsrippe 5 ausgebildete zweite Ausgabekanal 4 ermöglicht darüber hinaus ein Kaffee unabhängig konstantes Auslaufverhalten, welches insbesondere unabhängig von der Dichte bzw. den viskosen Eigenschaften des Kaffees ist.

### Bezugszeichenliste

- 1: Kaffeeautomat
- 2: Ausgabeeinrichtung
- 3: erster Ausgabekanal
- 4: zweiter Ausgabekanal
- 5: Führungsrippe
- 6: Tropfkante
- 7: Ausgang des ersten Ausgabekanals
- 8: Ausgang des zweiten Ausgabekanals
- 9: Kaffeeverteiler
- 10: Zulauf
- 11: erster Verteilkanal
- 12: zweiter Verteilkanal
- 13: Steg

## Patentansprüche

1. Kaffeeautomat (1) mit einer Ausgabeeinrichtung (2) zur Ausgabe von Milch, Milchschaum, Wasser und Kaffee, wobei über zumindest einen ersten Ausgabekanal (3) Milch, Milchschaum und/oder Wasser und über zumindest einen zweiten Ausgabekanal (4) Kaffee und/oder Wasser ausgebbar ist, **dadurch gekennzeichnet, dass** der zumindest eine zweite Ausgabekanal (4) als offene Rinne mit einer Führungsrippe (5) ausgebildet ist.

2. Kaffeeautomat nach Anspruch 1, **dadurch gekennzeichnet, dass** der zumindest eine zweite Ausgabekanal (4) schräg zum zumindest einen ersten Ausgabekanal (3) verläuft.

3. Kaffeeautomat nach Anspruch 1 oder 2, **dadurch gekennzeichnet, dass** die Führungsrippe (5) entlang des zumindest einen zweiten Ausgabekanals (4) verläuft und am Ende eine Tropfkante (6) bildet.

4. Kaffeeautomat nach einem der Ansprüche 1 bis 3, **dadurch gekennzeichnet, dass** der zumindest eine erste Ausgabekanal (3) vertikal verläuft und der zumindest eine zweite Ausgabekanal (4) um ca. 20° bis 40° geneigt dazu, wodurch ein jeweiliger Ausgang (7,8) der beiden Ausgabekanäle (3,4) weiter voneinander entfernt ist als ein jeweiliger Eingang.

5. Kaffeeautomat nach einem der Ansprüche 1 bis 4, **dadurch gekennzeichnet, dass** die Ausgabeeinrichtung (2) zwei erste Ausgabekanäle (3) und zwei zweite Ausgabekanäle (4) aufweist.

6. Kaffeeautomat nach Anspruch 5, **dadurch gekennzeichnet, dass** die Ausgabeeinrichtung (2) einen Kaffeeverteiler (9) mit einem einzigen Zulauf (10) und einem ersten mit dem einen zweiten Ausgabekanal (4) verbundenen Verteilkanal (11) und einem zweiten mit dem anderen zweiten Ausgabekanal (4) verbundenen Verteilkanal (12) aufweist.

7. Kaffeeautomat nach Anspruch 6, **dadurch gekennzeichnet, dass** der erste und/oder der zweite Verteilkanal (11,12) einen geringeren Durchmesser aufweisen/aufweist als der zugehörige zweite Ausgabekanal (4).

8. Ausgabeeinrichtung (2) zur Ausgabe von Milch, Milchschaum, Wasser und Kaffee, die mit einem Kaffeeautomaten (1) koppelbar ist, wobei über zumindest einen ersten Ausgabekanal (3) Milch, Milchschaum und/oder Wasser und über zumindest einen zweiten Ausgabekanal (4) Kaffee und/oder Wasser ausgebbar ist, **dadurch gekennzeichnet, dass** der zumindest eine zweite Ausgabekanal (4) als offene Rinne mit einer Führungsrippe (5) ausgebildet ist.

9. Ausgabeeinrichtung nach Anspruch 8, **dadurch gekennzeichnet, dass** der zumindest eine zweite Ausgabekanal (4) schräg zum zumindest einen ersten Ausgabekanal (3) verläuft.

10. Ausgabeeinrichtung nach Anspruch 8 oder 9, **dadurch gekennzeichnet, dass** die Führungsrippe (5) entlang des zumindest einen zweiten Ausgabekanals (4) verläuft und am Ende eine Tropfkante (6) bildet.

11. Ausgabeeinrichtung nach einem der Ansprüche 8 bis 10, **dadurch gekennzeichnet, dass** der zumindest eine erste Ausgabekanal (3) vertikal verläuft und der zumindest eine zweite Ausgabekanal (4) um ca. 20° bis 40° geneigt dazu, wodurch ein jeweiliger Ausgang (7,8) der beiden Ausgabekanäle (3,4) weiter voneinander entfernt ist als ein jeweiliger Eingang.

12. Ausgabeeinrichtung nach einem der Ansprüche 8 bis 11, **dadurch gekennzeichnet, dass** die Ausgabeeinrichtung (2) zwei erste Ausgabekanäle (3) und zwei zweite Ausgabekanäle (4) aufweist.

13. Ausgabeeinrichtung nach Anspruch 12, **dadurch gekennzeichnet, dass** die Ausgabeeinrichtung einen Kaffeeverteiler (9) mit einem einzigen Zulauf (10) und einem ersten mit dem einen zweiten Ausgabekanal (4) verbundenen Verteilkanal (11) und einem zweiten mit dem anderen zweiten Ausgabekanal (4) verbundenen Verteilkanal (12) aufweist.

14. Ausgabeeinrichtung nach Anspruch 13, **dadurch gekennzeichnet, dass** der erste und/oder der zweite Verteilkanal (11,12) einen geringeren Durchmesser aufweist als der zugehörige zweite Ausgabekanal (4).

## Claims

1. Automatic coffee machine (1) with a dispensing device (2) for dispensing milk, milk foam, water and coffee, wherein milk, milk foam and/or water can be dispensed via at least one first dispensing channel (3) and coffee and/or water can be dispensed via at least one second dispensing channel (4), **characterised in that** the at least one second dispensing channel (4) is embodied as an open channel with a guide rib (5).

2. Automatic coffee machine according to claim 1, **characterised in that** the at least one second dispensing channel (4) runs obliquely to the at least one first dispensing channel (3).

3. Automatic coffee machine according to claim 1 or 2, **characterised in that** the guide rib (5) runs along the at least one second dispensing channel (4) and forms a drip edge (6) at the end.

4. Automatic coffee machine according to one of claims 1 to 3, **characterised in that** the at least one first dispensing channel (3) runs vertically and the at least one second dispensing channel (4) runs inclined thereto by about 20° to 40°, whereby a respective outlet (7, 8) of the two dispensing channels (3, 4) is further apart from each other than a respective inlet.

5. Automatic coffee machine according to one of claims 1 to 4, **characterised in that** the dispensing device (2) has two first dispensing channels (3) and two second dispensing channels (4).

6. Automatic coffee machine according to claim 5, **characterised in that** the dispensing device (2) comprises a coffee distributor (9) with a single inlet (10) and a first distribution channel (11) connected to the one second dispensing channel (4) and a second distribution channel (12) connected to the other second dispensing channel (4).

7. Automatic coffee machine according to claim 6, **characterised in that** the first and/or the second distribution channel (11, 12) has/have a smaller diameter than the associated second dispensing channel (4).

8. Dispensing device (2) for dispensing milk, milk foam, water and coffee, which can be coupled to an automatic coffee machine (1), wherein milk, milk foam and/or water can be dispensed via at least one first dispensing channel (3) and coffee and/or water can be dispensed via at least one second dispensing channel (4), **characterised in that** the at least one second dispensing channel (4) is embodied as an open channel with a guide rib (5).

9. Dispensing device according to claim 8, **characterised in that** the at least one second dispensing channel (4) runs obliquely to the at least one first dispensing channel (3).

10. Dispensing device according to claim 8 or 9, **characterised in that** the guide rib (5) runs along the at least one second dispensing channel (4) and forms a drip edge (6) at the end.

11. Dispensing device according to one of claims 8 to 10, **characterised in that** the at least one first dispensing channel (3) runs vertically and the at least one second dispensing channel (4) runs inclined thereto by about 20° to 40°, whereby a respective outlet (7, 8) of the two dispensing channels (3, 4) is further apart from each other than a respective inlet.

12. Dispensing device according to one of claims 8 to 11, **characterised in that** the dispensing device (2) has two first dispensing channels (3) and two second dispensing channels (4).

13. Dispensing device according to claim 12, **characterised in that** the dispensing device comprises a coffee distributor (9) with a single inlet (10) and a first distribution channel (11) connected to the one second dispensing channel (4) and a second distribution channel (12) connected to the other second dispensing channel (4).

14. Dispensing device according to claim 13, **characterised in that** the first and/or the second distribution channel (11, 12) has a smaller diameter than the associated second dispensing channel (4).

## Revendications

1. Machine à café automatique (1) avec un dispositif de distribution (2) pour la distribution de lait, de mousse de lait, d'eau et de café, dans laquelle du lait, de la mousse de lait et/ou de l'eau peut être distribué(e) via au moins un premier canal de distribution (3) et du café et/ou de l'eau peut être distribué(e) via au moins un deuxième canal de distribution (4), **caractérisée en ce que** l'au moins un deuxième canal de distribution (4) est exécuté sous la forme d'un conduit ouvert avec une nervure de guidage (5).

2. Machine à café automatique selon la revendication 1, **caractérisée en ce que** l'au moins un deuxième canal de distribution (4) s'étend en biais par rapport à l'au moins un premier canal de distribution (3).

3. Machine à café automatique selon la revendication 1 ou 2, **caractérisée en ce que** la nervure de guidage (5) s'étend le long de l'au moins un deuxième canal de distribution (4) et forme un larmier (6) à l'extrémité.

4. Machine à café automatique selon l'une des revendications 1 à 3, **caractérisée en ce que** l'au moins un premier canal de distribution (3) s'étend verticalement et l'au moins un deuxième canal de distribution (4) selon une inclinaison d'environ 20° à 40° par rapport à celui-ci, les sorties respectives (7, 8) des deux canaux de distribution (3, 4) étant dès lors plus éloignées l'une de l'autre que les entrées respectives.

5. Machine à café automatique selon l'une des revendications 1 à 4, **caractérisée en ce que** le dispositif de distribution (2) présente deux premiers canaux de distribution (3) et deux deuxièmes canaux de distribution (4).

6. Machine à café automatique selon la revendication 5, **caractérisée en ce que** le dispositif de distribution (2) présente un partiteur de café (9) avec une seule alimentation (10) et un premier canal de partition (11) relié à un deuxième canal de distribution (4) et un deuxième canal de partition (12) relié à l'autre deuxième canal de distribution (4).

7. Machine à café automatique selon la revendication 6, **caractérisée en ce que** le premier et/ou le deuxième canal de partition (11, 12) présente/présentent un diamètre inférieur à celui du deuxième canal de distribution (4) correspondant.

8. Dispositif de distribution (2) pour la distribution de lait, de mousse de lait, d'eau et de café, pouvant être couplé à une machine à café automatique (1), dans lequel du lait, de la mousse de lait et/ou de l'eau peut être distribué(e) via au moins un premier canal de distribution (3) et du café et/ou de l'eau peut être distribué(e) via au moins un deuxième canal de distribution (4), **caractérisé en ce que** l'au moins un deuxième canal de distribution (4) est exécuté sous la forme d'un conduit ouvert avec une nervure de guidage (5).

9. Dispositif de distribution selon la revendication 8, **caractérisé en ce que** l'au moins un deuxième canal de distribution (4) s'étend en biais par rapport à l'au moins un premier canal de distribution (3).

10. Dispositif de distribution selon la revendication 8 ou 9, **caractérisé en ce que** la nervure de guidage (5) s'étend le long de l'au moins un deuxième canal de distribution (4) et forme un larmier (6) à l'extrémité.

11. Dispositif de distribution selon l'une des revendications 8 à 10, **caractérisé en ce que** l'au moins un premier canal de distribution (3) s'étend verticalement et l'au moins un deuxième canal de distribution (4) selon une inclinaison d'environ 20° à 40° par rapport à celui-ci, les sorties respectives (7, 8) des deux canaux de distribution (3, 4) étant dès lors plus éloignées l'une de l'autre que les entrées respectives.

12. Dispositif de distribution selon l'une des revendications 8 à 11, **caractérisé en ce que** le dispositif de distribution (2) présente deux premiers canaux de distribution (3) et deux deuxièmes canaux de distribution (4).

13. Dispositif de distribution selon la revendication 12, **caractérisé en ce que** le dispositif de distribution présente un partiteur de café (9) avec une seule alimentation (10) et un premier canal de partition (11) relié à un deuxième canal de distribution (4) et un deuxième canal de partition (12) relié à l'autre deuxième canal de distribution (4).

14. Dispositif de distribution selon la revendication 13, **caractérisé en ce que** le premier et/ou le deuxième canal de partition (11, 12) présente/présentent un diamètre inférieur à celui du deuxième canal de distribution (4) correspondant.
